# EUROPÄISCHE PATENTSCHRIFT

(11) **EP 1 651 436 B1**
(45) Veröffentlichungstag und Bekanntmachung des Hinweises auf die Patenterteilung: **09.12.2009**
(21) Anmeldenummer: 04740945.3
(22) Anmeldetag: 13.07.2004
(51) Int. Cl.: B32B 27/06

(54) **VERFAHREN ZUR HERSTELLUNG VON KUNSTSTOFFFORMTEILEN MIT FUNKTIONALEN OBERFL CHEN**
METHOD FOR PRODUCING MOLDED PLASTIC PARTS HAVING FUNCTIONAL SURFACES
PROCEDE POUR REALISER DES PIECES MOULEES EN MATIERE PLASTIQUE PRESENTANT DES SURFACES FONCTIONNELLES

(30) Priorität: 04.08.2003 DE 10335620
(43) Veröffentlichungstag der Anmeldung: 03.05.2006
(73) Patentinhaber: BASF Coatings AG, 48165 Münster (DE)
(72) Erfinder: HINTZE-BRÜNING, Horst, 48165 Münster (DE); SAEDLER, Markus, 48163 Münster (DE); RAKA, Fatmir, 48143 Münster (DE)
(86) Internationale Anmeldenummer: PCT/EP2004/007698
(87) Internationale Veröffentlichungsnummer: WO 2005/016641

(56) Entgegenhaltungen:
- EP-A- 0 874 027
- WO-A-00/63015

## Beschreibung

### Gebiet der Erfindung

Die vorliegende Erfindung betrifft ein neues Verfahren zur Herstellung von Kunststoffformteilen mit funktionalen Oberflächen. Außerdem betrifft die vorliegende Erfindung die Verwendung der mit Hilfe des neuen Verfahrens hergestellten Kunststoffformteile mit funktionalen Oberflächen.

### Stand der Technik

Ein Verfahren zur Herstellung von Kunststoffformteilen (M/T/B) mit funktionalen Oberflächen (O), bei dem man
(I) auf einer thermoplastischen Trägerfolie (T) eine Beschichtung (B) erzeugt, indem man eine Oberfläche (T.1) von (T)
   (1.1) mit mindestens einem pigmentierten Beschichtungsstoff (B.1) beschichtet und
   (I.2) die resultierende Schicht (B.1) mit mindestens einem chemisch härtbaren Beschichtungsstoff (B.2), beschichtet, wodurch die Schicht (B.2) resultiert, die nach ihrer Härtung eine transparente Beschichtung (B.2) ergibt,
(II) die resultierende beschichtete, thermoplastische Trägerfolie (T/B) in ein geöffnetes Formwerkzeug einlegt,
(III) das Formwerkzeug schließt und die unbeschichtete Seite (T.2) der beschichteten, thermoplastischen Trägerfolie (T/B) mit einem flüssigen Kunststoffmaterial (M) in Berührung bringt, wodurch die beschichtete, thermoplastische Trägerfolie (T/B) geformt und mit dem Kunststoffmaterial (M) haftfest verbunden wird, und das Kunststoffmaterial (M) sich verfestigen lässt und
(IV) das resultierende beschichtete Kunststoffformteil (M/T/B), dessen Beschichtung (B) nicht, partiell oder vollständig gehärtet ist, dem Formwerkzeug entnimmt, wobei man die
(V) im Verfahrenschritt (I) und/oder nach Abschluss des Verfahrenschritts (I) und/oder im Verfahrenschritt (III) und/oder nach dem Verfahrenschritt (IV) die nicht oder partiell gehärtete Beschichtung (B) vollständig härtet oder nach dem Verfahrensschritt (IV) die vollständig gehärtete Beschichtung (B) nachhärtet;
wobei die Beschichtung (B) wenigstens zeitweise mit einer Schutzfolie (S) bedeckt ist, ist aus der internationalen Patentanmeldung WO 00/63015 A 1 bekannt. Das Verfahren liefert jedoch Kunststoffformteile (M/T/B) mit unbefriedigenden Oberflächeneigenschaften. Insbesondere haben die funktionalen Oberflächen (O) einen unzureichenden Verlauf, eine unzureichende Abbildungsunterscheidbarkeit (D.O.I., » distinctiveness of the reflected image«) und/oder einen unzureichenden Glanz. Häufig enthalten sie auch sichtbare Oberflächenstörungen. Dies gilt vor allem für Fälle, bei denen das Verfahrensprodukt des Verfahrenschritts (I) vor der Durchführung des Verfahrenschritts (II) und/oder das Verfahrensprodukt des Verfahrenschritts (IV) vor der Durchführung des Verfahrenschritts (V) länger gelagert werden mussten.

Insgesamt haben die mit dem bekannten Verfahren hergestellten Kunststoffformteile (M/T/B) häufig nicht die so genannte Automobilqualität (vgl. hierzu auch das europäische Patent EP 0 352 298 B1, Seite 15, Zeile 42, bis Seite 17, Zeile 40), sodass sie insbesondere nicht als Anbauteile für PKW-Karosserien verwendet werden können.

### Aufgabe der Erfindung

Der vorliegenden Erfindung lag die Aufgabe zugrunde, ein neues Verfahren zur Herstellung von Kunststoffformteilen (M/T/B) mit funktionalen Oberflächen (O) zu finden, das die Nachteile des Standes der Technik nicht mehr länger aufweist, sondern das Kunststoffformteile (M/T/B) mit hervorragenden Oberflächeneigenschaften liefert. Insbesondere sollen die funktionalen Oberflächen (O) einen hervorragenden Verlauf, eine hervorragende Abbildungsunterscheidbarkeit (D.O.I., »distinctiveness of the reflected image«) und einen sehr guten Glanz aufweisen und keine sichtbaren Oberflächenstörungen enthalten. Dies soll vor allem auch für die Fälle gelten, bei denen das Verfahrensprodukt des Verfahrenschritts (I) vor der Durchführung des Verfahrenschritts (II) und/oder das Verfahrensprodukt des Verfahrenschritts (IV) vor der Durchführung des Verfahrenschritts (V) länger gelagert werden müssen. Insgesamt sollen die mit dem neuen Verfahren hergestellten Kunststoffformteile (M/T/B) die so genannte Automobilqualität (vgl. hierzu auch das europäische Patent EP 0 352 298 B1, Seite 15, Zeile 42, bis Seite 17, Zeile 40) haben, sodass sie insbesondere als Anbauteile für PKW-Karosserie der Härtung, insbesondere für Karosserien von PKW der Oberklasse, verwendet werden können.

### Gegenstand der Erfindung

Dem gemäß wurde das neue Verfahren zur Herstellung von Kunststoffformteilen (M/T/B) mit funktionalen Oberflächen (O) gefunden, bei dem man
(I) auf einer thermoplastischen Trägerfolie (T) eine Beschichtung (B) erzeugt, indem man eine Oberfläche (T.1) von (T)
   (I.1) mit mindestens einem pigmentierten Beschichtungsstoff (B.1) beschichtet und
   (I.2) die resultierende Schicht (B.1) mit mindestens einem chemisch härtbaren Beschichtungsstoff (B.2), beschichtet, wodurch die Schicht (B.2) resultiert, die nach ihrer Härtung eine transparente Beschichtung (B.2) ergibt,
(II) die resultierende beschichtete, thermoplastische Trägerfolie (T/B) in ein geöffnetes Formwerkzeug einlegt,
(III) das Formwerkzeug schließt und die unbeschichtete Seite (T.2) der beschichteten, thermoplastischen Trägerfolie (T/B) mit einem flüssigen Kunststoffmaterial (M) in Berührung bringt, wodurch die beschichtete, thermoplastische Trägerfolie (T/B) geformt und mit dem Kunststoffmaterial (M) haftfest verbunden wird, und das Kunststoffmaterial (M) sich verfestigen lässt und
(IV) das resultierende beschichtete Kunststoffformteil (M/T/B), dessen Beschichtung (B) nicht, partiell oder vollständig gehärtet ist, dem Formwerkzeug entnimmt, wobei man die
(V) im Verfahrenschritt (I) und/oder nach Abschluss des Verfahrenschritts (I) und/oder im Verfahrenschritt (III) und/oder nach dem Verfahrenschritt (IV) die nicht oder partiell gehärtete Beschichtung (B) vollständig härtet oder nach dem Verfahrensschritt (IV) die vollständig gehärtete Beschichtung (B) nachhärtet;
wobei die Beschichtung (B) wenigstens zeitweise mit einer Schutzfolie (S) bedeckt ist, dadurch gekennzeichnet, dass die Schutzfolie (S)
(s.1) im Temperaturbereich von Raumtemperatur bis 100 °C einen Speichermodul E' von mindestens 10⁷ Pa,
(s.2) längs und quer zu der bei der Herstellung von (S) mit Hilfe gerichteter Herstellverfahren erzeugten Vorzugsrichtung bei 23 °C eine Bruchdehnung > 300% und
(s.3) bei einer Schichtdicke von 50 µm eine Transmission > 70% für UV-Strahlung und sichtbares Licht einer Wellenlänge von 230 bis 600 nm hat
und dass die der Beschichtung (B) zugewandte Seite (S.1) der Schutzfolie (S)
(s. 1. 1) eine Härte < 0,06 GPa bei 23 °C und
(s.1.2) eine mit Hilfe der atomic force miscroscopy (AFM) bestimmte Rauhigkeit, entsprechend einem Rₐ-Wert aus 50 µm² < 30 nm, aufweist.

Im Folgenden wird das neue Verfahren zur Herstellung von Kunststoffformteilen (M/T/B) mit funktionalen Oberflächen (O) als »erfindungsgemäßes Verfahren« bezeichnet.

Weitere Erfindungsgegenstände gehen aus der Beschreibung hervor.

### Die Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Verfahrens gelöst werden konnte.

Insbesondere war es überraschend; dass das erfindungsgemäße Verfahren die Nachteile des Standes der Technik nicht mehr länger aufwies, sondern Kunststoffformteile (M/T/B) mit hervorragenden Oberflächeneigenschaften lieferte. Ihre funktionalen Oberflächen (O) wiesen einen hervorragenden Verlauf, eine hervorragende Abbildungsunterscheidbarkeit (D.O.I., »distinctiveness of the reflected image«) und einen sehr guten Glanz auf und enthielten keine sichtbaren Oberflächenstörungen mehr. Dies galt auch für die Fälle, bei denen das Verfahrensprodukt des Verfahrenschritts (I) vor der Durchführung des Verfahrenschritts (II) und/oder das Verfahrensprodukt des Verfahrenschritts (IV) vor der Durchführung des Verfahrenschritts (V) länger gelagert wurden.

Ganz besonders überraschte, die außerordentlich breite Anwendbarkeit der mit dem erfindungsgemäßen Verfahren hergestellten Kunststoffformteile (M/T/B). So konnten sie hervorragend für die Herstellung von Fortbewegungsmitteln, Bauwerken, Fenstern, Türen, Möbeln und Gebrauchsgegenständen jeglicher Art eingesetzt werden. Vor allem aber wiesen sie die so genannte Automobilqualität (vgl. hierzu auch das europäische Patent EP 0 352 298 B1, Seite 15, Zeile 42, bis Seite 17, Zeile 40) auf, sodass sie insbesondere als Anbauteile für PKW-Karosserien, insbesondere für Karosserien von PKW der Oberklasse, verwendet werden konnten.

### Ausführliche Beschreibung der Erfindung

### 1. Der Verfahrenschritt (I) des erfindungsgemäßen Verfahrens

Das erfindungsgemäße Verfahren geht im Verfahrenschritt (I) aus von der Erzeugung einer Beschichtung (B) auf einer Oberfläche (T.1) einer thermoplastischen Trägerfolie (T).

Die Beschichtung (B) wird erzeugt, indem man in einem Verfahrenschritt (I.1) die Oberfläche (T.1) von (T) mit mindestens einem, insbesondere einem, Beschichtungsstoff (B.1) beschichtet. Die Beschichtung kann dabei vollflächig oder bildförmig erfolgen. Vorzugsweise erfolgt sie vollflächig. Die resultierende Schicht oder die resultierenden Schichten (B.1) können einschichtig oder mehrschichtig, insbesondere zweischichtig, sein.

Die Schicht oder die Schichten (B.1) werden im Verfahrenschritt (I.2) mit mindestens einem, insbesondere einem, chemisch härtbaren Beschichtungsstoff (B.2) beschichtet, wodurch mindestens eine, insbesondere eine, Schicht (B.2) resultiert, die nach der Härtung eine transparente, insbesondere klare, transparente, Beschichtung (B.2) ergibt.

### 1.2 Die im Verfahrenschritt (I) eingesetzten Materialien

### 1.2.1 Die thermoplastische Trägerfolie (T)

Die thermoplastische Trägerfolie (T) kann einschichtig sein oder mindestens eine weitere Schicht (WS) umfassen.

Insbesondere kann (T) auf der der späteren Beschichtung (B) abgewandten Seite (T.2) mindestens eine, insbesondere eine, Klebschicht (KS) enthalten. Zwischen der Klebschicht (KS) und der Oberfläche von (T.2) kann sich noch eine Übergangsschicht (ÜS) befinden. Die Klebschicht (KS) kann zum vorläufigen Schutz mit einer leicht abnehmbaren Release-Folie (RF) bedeckt sein, die vor dem Verfahrenschritt (II) abgelöst wird.

Zwischen der Oberfläche (T.1) und der späteren Beschichtung (B) kann sich noch mindestens eine, insbesondere eine, Klebschicht (KS) befinden. Dabei kann oder können sich zwischen der Oberfläche (T.1) und der Klebschicht (KS) und/oder zwischen der Klebschicht (KS) und der Beschichtung (B) mindestens eine, insbesondere eine, Übergangsschicht (ÜS) befinden.

Die Trägerfolie (T) besteht im Wesentlichen oder völlig aus mindestens einem thermoplastischen Polymer. Vorzugsweise wird das thermoplastische Polymer aus der Gruppe, bestehend aus üblichen und bekannten, linear, verzweigt, sternförmig kammförmig und/oder, blockartig aufgebauten Homo- und Copolymerisaten, ausgewählt. Bevorzugt werden die Homo- und Copolymerisate aus der Gruppe, bestehend aus Polyurethanen, Polyestern, insbesondere Polyethylenterephthalaten und Polybutylenterphthalaten, Polyethern, Polyolefinen, Polyamiden, Polycarbonaten, Polyvinylchloriden, Polyvinylidenfluoriden, Poly(meth)acrylaten, insbesondere Polymethylmethacrylaten und schlagzäh modifizierten Polymethylmethacrylaten, Polystyrolen, insbesondere schlagzäh modifizierten Polystyrolen, speziell Acrylnitrilbutadienstyrolcopolymeren (ABS), Acrylstyrolacrylnitrilcopolymeren (ASA) und Acrylnitrilethylenpropylendienstyrolcopolymeren (A-EPDM); Polyetherimiden, Polyetherketonen, Polyphenylensulfiden, Polyphenylenethern und Mischungen dieser Polymeren, ausgewählt.

Mit besonderem Vorteil werden ASA, Blends aus ASA und Polycarbonaten, Polymethylmethacrylate oder schlagzäh modifizierte Polymethylmethacrylate verwendet.

Die Homo- und Copolymerisate können die auf dem Gebiet der thermoplastischen Kunststoffe üblichen und bekannten Additive enthalten. Außerdem könne sie übliche und bekannte Füllstoffe, Verstärkerfüllstoffe und Fasern enthalten. Nicht zuletzt können sie auch die nachstehend beschriebenen Pigmente und/oder übliche und -bekannte Farbstoffe enthalten.

Als Übergangschichten (ÜS) können übliche und bekannte, vorzugsweise 1 bis 50 µm dicke Schichten aus thermoplastischen Materialien, insbesondere aus den vorstehend beschriebenen thermoplastischen Polymeren verwendet werden.

Als Klebschichten (KS) können übliche und bekannte, vorzugsweise 1 bis 10 µm dicke Schichten aus thermoplastischen Kontaktlebern verwendet werden.

Vorzugsweise ist die Trägerfolie (T), inklusive der ggf. vorhandenen weiteren Schicht(en) (WS), mehr als 0,5, bevorzugt mehr als 0,6 und insbesondere mehr als 0,7 mm dick.

### 1.2.2 Der pigmentierte Beschichtungsstoff (B.1)

Der pigmentierte Beschichtungsstoff (B.1) enthält mindestens ein Pigment. Vorzugsweise wird das Pigment, aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt.

Vorzugsweise werden die farb- und/oder effektgebenden Pigmente verwendet.

### 1.2.3 Der härtbare Beschichtungsstoff (B.2)

Der härtbare Beschichtungsstoff (B.2) ist chemisch, d. h. thermisch oder mit aktinischer Strahlung, insbesondere mit aktinischer Strahlung, härtbar. Er ergibt nach seiner Applikation, der Bildung der Schicht (B.2) und deren Härtung eine transparente, insbesondere klare, transparente, Beschichtung (B.2).

Hier und im folgenden wird unter aktinischer Strahlung elektromagnetische Strahlung, wie nahes Infrarot (NIR), sichtbares Licht, UV-Strahlung, Röntgenstrahlung und Gammastrahlung, insbesondere UV-Strahlung, und Korpuskularstrahlung, wie Elektronenstrahlung, Betastrahlung, Alphastrahlung, Neutronenstrahlung und Protonenstrahlung, insbesondere Elektronenstrahlung, verstanden.

Der härtbare Beschichtungsstoff (B.2) ist flüssig oder fest. Er kann transparente Pigmente und Füllstoffe enthalten. Außerdem kann er molekulardispers lösliche Farbstoffe enthalten. Vorzugsweise ist er aber frei von transparenten Pigmenten und Füllstoffen sowie Farbstoffen.

Als Beschichtungsstoffe (B.2) sind alle üblichen und bekannten Klarlacke geeignet.

### 1.3 Die im Verfahrenschritt (I) eingesetzten Applikationsverfahren

Die vorstehend beschriebenen, pigmentierten Beschichtungsstoffe (B.1) und Klarlacke (B.2) können mit Hilfe aller Applikationsverfahren, die für Beschichtungsstoffe üblich und bekannt sind, auf (T.1) aufgetragen werden.

Grundsätzlich kann der pigmentierte Beschichtungsstoff (B.1) vollflächig oder bildförmig auf die Oberfläche (T.1) appliziert werden. Vorzugsweise wird er vollflächig appliziert.

Vor der Applikation des Beschichtungsstoffs (B.2) kann oder können im Bedarfsfall auf die Oberfläche der Schicht (B.1) noch mindestens eine bildförmige Schicht (BS), eine Klebschicht (KS) und/oder eine Übergangsschicht (ÜS) aufgetragen werden.

### 1.4 Die Produkte des Verfahrenschritts (I)

Im Verfahrenschritt (I) resultiert eine beschichtete, thermoplastische Trägerfolie (T/B). Ihre Beschichtung (B) kann nicht, partiell oder vollständig gehärtet sein.

Je nach dem, welche thermoplastische Trägerfolie (T) eingesetzt worden ist, kann die beschichtete, thermoplastische Trägerfolie (T/B) noch mindestens eine weitere Schicht (WS) enthalten.

Insbesondere kann sie auf der der Beschichtung (B) abgewandten Seite (T.2) mindestens eine, insbesondere eine, Klebschicht (KS) enthalten. Zwischen der Klebschicht (KS) und der Oberfläche von (T.2) kann sich noch eine Übergangsschicht (ÜS) befinden. Die Klebschicht (KS) kann zum vorläufigen Schutz mit einer leicht abnehmbaren Release-Folie (RF) bedeckt sein.

Zwischen der Oberfläche (T.1) und der Beschichtung (B) kann sich noch mindestens eine, insbesondere eine, Klebschicht (KS) befinden. Dabei kann oder können sich zwischen der Oberfläche (T.1) und der Klebschicht (KS) und/oder zwischen der Klebschicht (KS) und der Beschichtung (B) mindestens eine, insbesondere eine, Übergangsschicht (ÜS) befinden.

Innerhalb der Beschichtung (B) kann sich zwischen der Schicht (B.1) und der Schicht (B.2) noch mindestens eine bildförmige Schicht (BS), eine Klebschicht (KS) und/oder eine Übergangsschicht (ÜS) befinden.

Die beschichtete, thermoplastische Trägerfolie (T/B) kann unmittelbar nach ihrer Herstellung weiterverarbeitet werden oder sie kann vor der Durchführung des Verfahrenschritts (II) gegebenenfalls in der Form von Rollen gelagert werden.

### 2. Der Verfahrenschritt (II) des erfindungsgemäßen Verfahrens

Im Verfahrenschritt (II) wird die vorstehend beschriebene beschichtete, thermoplastische Trägerfolie (T/B) in ein geöffnetes Formwerkzeug, insbesondere ein Tiefziehwerkzeug eingelegt. Zu diesem Zweck kann die (T/B) von einer Rolle gewickelt und in geeignet dimensionierte Stücke zugeschnitten werden. Außerdem können (T/B) und die zugeschnittenen Stücke vorgeformt, insbesondere an die Konturen der Formwerkzeuge angepasst werden.

### 3. Der Verfahrenschritt (II) des erfindungsgemäßen Verfahrens

Im Verfahrenschritt (II) wird das Formwerkzeug geschlossenen, und die oder beschichtete Seite (T.2) der beschichteten, thermoplastische Trägerfolie (T/B) wird mit einem flüssigen Kunststoffmaterial (M) in Berührung gebracht, wodurch die beschichtete thermoplastische Trägerfolie (T/B) geformt und mit dem Kunststoffmaterial (M) haftfest verbunden wird. Anschließend lässt man das Kunststoffmaterial (M) sich verfestigen.

Vorzugsweise enthält das flüssige Kunststoffmaterial (M) mindestens ein geschmolzenes, thermoplastisches Polymer, insbesondere mindestens eines der vorstehend beschriebenen thermoplastischen Polymeren, oder es besteht aus diesem. Die Verfahrensvariante, bei der ein solches geschmolzenes, thermoplastisches Polymer verwendet wird, wird auch als Hinterspritzen (»injection moulding«) bezeichnet.

Bei dem flüssigen Kunststoffmaterial kann sich aber auch um ein übliches und bekanntes reaktionsfähiges Gemisch handeln, das im Formwerkzeug das feste Kunststoffmaterial (M) bildet. Das Kunststoffmaterial (M) kann dabei die vorstehend im Zusammenhang mit der Trägerfolie (T) beschriebenen Zusatzstoffe enthalten. Die Verfahrensvariante, bei der ein solches reaktionsfähiges Gemisch (M) verwendet wird, wird auch als Hinterschäumen (»reaction-injection moulding«, RIM) bezeichnet.

Im Verfahrenschritt (II) resultiert das beschichtete Kunststoffformteil (M/T/B), dessen Beschichtung (B) nicht, partiell oder vollständig gehärtet ist.

### 4. Der Verfahrenschritt (IV) des erfindungsgemäßen Verfahrens

Im Verfahrenschritt (IV) wird das beschichtete Kunststoffformteil (M/T/B) dem Formwerkzeug entnommen. Es kann danach unmittelbar weiterverarbeitet oder bis zur Durchführung des Verfahrenschritts (V) gelagert werden.

### 5. Der Verfahrenschritt (V) des erfindungsgemäßen Verfahrens

Im Verfahrenschritt (V) wird die Beschichtung (B) gehärtet.

Dabei wird im Verfahrenschritt (I) und/oder nach dem Verfahrenschritt (I) und/oder im Verfahrenschritt (III) und/oder nach dem Verfahrenschritt (IV) die nicht oder partiell gehärtete Beschichtung (B) vollständig gehärtet oder nach dem Verfahrensschritt (IV) die vollständig gehärtete Beschichtung (B) nachgehärtet.

Vorzugsweise wird die Beschichtung (B), insbesondere die Schicht (B.2), im Verfahrenschritt (I) und/oder nach dem Verfahrenschritt (I) vor dem Verfahrenschritt (II) partiell oder vollständig, insbesondere partiell, gehärtet. Besonders bevorzugt wird die Beschichtung (B), insbesondere die Schicht (B.2), im Verfahrenschritt (I) und/oder nach dem Verfahrenschritt (I) nach der Verformung, insbesondere der Anpassung der beschichteten, thermoplastischen Trägerfolie (T/B) an die Kontur des Formwerkzeugs, in das (T/B) im Verfahrenschritt (II) eingelegt wird, partiell oder vollständig gehärtet.

Die partiell gehärtete Beschichtung (B), insbesondere die Beschichtung (B.2), wird anschließend im Verfahrenschritt (III) und/oder nach dem Verfahrenschritt (IV) vollständig gehärtet.

Liegt bereits nach den Verfahrenschritten (I) oder (III) eine vollständig gehärtete Beschichtung (B), insbesondere eine Beschichtung (B.2), vor, wird sie nach dem Verfahrenschritt (IV) nachgehärtet, wodurch ihre Vernetzungsdichte erhöht wird.

Die Verfahren und die Vorrichtungen, die für die Härtung eingesetzt werden, richten sich nach der stofflichen Zusammensetzung der Beschichtung (B), d. h. danach, ob die Beschichtung (B) Schichten (B.1) und (B.2) umfasst, die physikalisch, thermisch oder mit aktinischer Strahlung härtbar sind.

Bei einer vorteilhaften Verfahrensweise wird die Schicht (B.2) nach dem Verfahrenschritt (I) nach der Verformung, insbesondere Anpassung der beschichteten, thermoplastischen Trägerfolie (T/B) an die Kontur des Formwerkzeugs, aber vor dem Verfahrenschritt (II) vollständig gehärtet. Die Schicht (B.1) wird dann im Verfahrenschritt (III) partiell oder vollständig gehärtet. Die resultierende vollständig gehärtete Beschichtung (B.2) kann anschließend nach dem Verfahrenschritt (IV) nachgehärtet werden. Das resultierende Kunststoffformteil (M/T/B) kann vorzugsweise thermisch nachbehandelt werden, um eine nur partiell gehärtete Beschichtung (B.1) vollständig zu härten und/oder die Vernetzungsdichte einer vollständig gehärteten Beschichtung (B.1) und/oder (B.2) zu erhöhen.

### 6. Die für das erfindungsgemäße Verfahren wesentliche Schutzfolie (S)

### 6.1 Das Auflegen und Abziehen Schutzfolie (S)

Bei der Durchführung des erfindungsgemäßen Verfahrens ist die Beschichtung (B) wenigstens zeitweise mit einer Schutzfolie (S) bedeckt.

Vorzugsweise wird bei dem erfindungsgemäßen Verfahren die Schutzfolie (S) nach dem Verfahrenschritt (I), bevorzugt vor dem Verfahrenschritt (II) und insbesondere bevor die beschichtete, thermoplastische Trägerfolie (T/B) vorgeformt, insbesondere an die Kontur des Formwerkzeugs angepasst, wird, auf die Beschichtung (B) aufgebracht. Ganz besonders bevorzugt wird die Schutzfolie (S) auf die nicht gehärtete Beschichtung (B), insbesondere die nicht gehärtete Schicht (B.2), aufgelegt.

Im Rahmen des erfindungsgemäßen Verfahrens kann die resultierende beschichtete, thermoplastische, mit der Schutzfolie (S) bedeckte Trägerfolie (T/B/S) in unterschiedlicher Weise weiterverarbeitet werden.

Zunächst einmal kann (T/B/S) unmittelbar nach ihrer Herstellung weiterverarbeitet oder zur Rolle aufgewickelt und in dieser Form bis zur weiteren Verarbeitung gelagert werden.

In einer ersten bevorzugten Variante kann die Schutzfolie (S) vor dem Verfahrenschritt (II) von der Beschichtung (B) von (T/B/S) abgezogen werden. Dies kann geschehen, bevor oder nachdem, insbesondere nachdem, (T/B) bzw. (T/B/S) vorgeformt, insbesondere an die Kontur des Formwerkzeugs angepasst, wird. Ganz besonders bevorzugt wird die Schutzfolie (S) bevor oder nachdem, insbesondere bevor, die Schicht (B.2) der Beschichtung (B) der vorgeformten (T/B/S) vor dem Verfahrenschritt (II) partiell oder vollständig, insbesondere vollständig, insbesondere mit aktinischer Strahlung, gehärtet worden ist, abgezogen.

In einer zweiten bevorzugten Variante kann die Schutzfolie (S) nach dem Verfahrenschritt (IV) von der Beschichtung (B) des Kunststoffformteils (M/T/B/S) abgezogen werden. Dies kann vor oder nach der vollständigen Härtung der Beschichtung (B) oder vor oder nach der thermischen Nachbehandlung des Kunststoffformteils (M/T/B) geschehen.

Ganz besonders bevorzugt wird die erste bevorzugte Variante eingesetzt.

### 6.2 Der Aufbau der erfindungsgemäß zu verwendenden Schutzfolie (S)

Für die erfindungsgemäß zu verwendende Schutzfolie (S) ist es wesentlich, dass sie im Temperaturbereich von Raumtemperatur bis 100 °C einen Speichermodul E' von 10⁷ Pa, insbesondere 10⁷ bis 10⁸ Pa, hat. Dabei wird der Speichermodul E' mit der Dynamisch-Mechanischen Thermo-Analyse DMTA an freien Folien gemessen (vgl. hierzu das deutsche Patent DE 197 09 467 C2).

Für die erfindungsgemäß zu verwendende Schutzfolie (S) ist es außerdem wesentlich, dass sie längs und quer zu der bei ihrer Herstellung mit Hilfe gerichteter Herstellverfahren, wie Extrusion oder Folienblasen, erzeugten Vorzugsrichtung bei 23 °C eine Bruchdehnung > 300%, insbesondere 400 bis 900%, hat.

Des Weiteren ist es für die erfindungsgemäß zu verwendende Schutzfolie (S) wesentlich, dass sie bei einer Schichtdicke von 50 µm eine Transmission > 70% für UV-Strahlung und sichtbares Licht einer Wellenlänge von 230 bis 600 nm hat.

Nicht zuletzt ist es für die erfindungsgemäß zu verwendende Schutzfolie (S) wesentlich, dass die der Beschichtung (B) zugewandte Seite (S.1) bei 23 °C eine Härte < 0,06 GPa, insbesondere < 0,02 GPa, (Nanohärte, gemessen mit einem Berkovich-Indentor bei 1 mN) hat und eine mit Hilfe der atomic force microscopy (AFM) gemessene Rauhigkeit Rₐ aus 50 µm² < 30 nm, insbesondere < 25 nm, aufweist.

Vorzugsweise erfordert der Abzug der erfindungsgemäß zu verwendenden Schutzfolie (S) von der Beschichtung (B) eine gemittelte Kraft von < 250 mN/cm, bevorzugt < 100 mN/cm und insbesondere < 60 mN/cm.

Vorzugsweise wird die erfindungsgemäß zu verwendende Schutzfolie (S) aus der Gruppe, bestehend aus Folien aus Polyethylen, Polypropylen, Ethylencopolymerisaten, Propylencopolymerisaten und Ethylen-Propylen-Copolymerisaten, ausgewählt.

Es ist von Vorteil, wenn die Seite (S.1) der Schutzfolie (S) klebende Eigenschaften hat.

Außerdem ist es von Vorteil, wenn die der Beschichtung (B) abgewandte Seite (S.2) der Schutzfolie (S) antiblockierende Eigenschaften hat.

Besonders vorteilhafte Schutzfolien (S) sind aus mehreren Schichten aufgebaut.

Ganz besonders vorteilhafte Schutzfolien (S) sind aus mindestens einer Kernschicht (KNS) aus mindestens einem Homo- oder Copolymerisat, und mindestens einer weiteren Schicht, ausgewählt aus der Gruppe bestehend aus Klebschichten (KS) und Antiblocking-Schichten (AS), aufgebaut.

Es sich von Vorteil, wenn die Klebschichten (KS) und die Antiblocking-Schichten (AS) thermoplastisch sind.

Vorzugsweise werden die Homo- und Copolymerisate der Kernschicht (KNS) aus der Gruppe, bestehend aus Polyethylen, Polypropylen, Ethylencopolymerisaten, Propylencopolymerisaten und Ethylen-Propylen-Copolymerisaten, ausgewählt.

Ganz besonders bevorzugt sind die Schutzfolien (S) 10 bis 100 µm, insbesondere 30 bis 70 µm, dick.

Die erfindungsgemäß zu verwendenden Schutzfolien (S) sind üblich und bekannt.

### 7. Die Kunststoffformteile (M/T/B) mit den funktionalen Oberflächen (O)

### 7.1 Funktionalität und Aufbau

Das erfindungsgemäße Verfahren liefert in hervorragend-reproduzierbarer Weise die Kunststoffformteile (M/T/B) mit den funktionalen Oberflächen (O).

Je nach dem, welche Pigmente in dem Beschichtungen (B), insbesondere in den pigmentierten Beschichtungen (B.1) vorliegen, ist die Funktionalität der Oberfläche (O) farbgebend, effektgebend, farb- und effektgebend, elektrisch leitfähig, magnetisch abschirmend, korrosionshemmend, fluoreszierend und/oder phosphoreszierend. Dabei kann die Oberfläche (O) auch mehrere Funktionen zugleich haben. Insbesondere ist die Oberfläche (O) farb- und/oder effektgebend.

Je nach dem, welche Ausgangsprodukte und -Folien verwendet worden sind, können die Kunststoffformteile (M/T/B) außer dem Kunststoffmaterial (M), der Trägerfolie (T) und der Beschichtung (B) noch mindestens eine weitere Schicht (WS) enthalten.

Beispielsweise kann sich zwischen (M) und (T), zwischen (T) und (B) und/oder zwischen (B.1) und (B.2) mindestens eine Klebschicht (KS) befinden. An Stelle der Klebschichten (KS) oder zusätzlich zu diesen können Übergangsschichten (ÜS) vorhanden sein. (B.1) kann außerdem von einer bildmäßigen Beschichtung (BS) bedeckt sein, oder (B.1) selbst kann eine bildmäßige Beschichtung sein. Beispielsweise können die Kunststoffformteile (M/T/B) den folgenden Aufbau haben:
(M)/(KS)/(ÜS)/(T)/(ÜS)(KS)(B.1)/(BS)/(B.2).

### 7.2 Die Vorteile und die Verwendbarkeit der Kunststoffformteile (M/T/B) mit den funktionalen Oberflächen (O)

Die Kunststoffformteile (M/T/B) mit den funktionalen Oberflächen (O) haben hervorragende Oberflächeneigenschaften. Ihre funktionalen Oberflächen (O) weisen einen hervorragenden Verlauf, eine hervorragende Abbildungsunterscheidbarkeit (D.O.I., »distinctiveness of the reflected image«) und einen sehr guten Glanz auf und enthalten keine sichtbaren Oberflächenstörungen mehr. Dies gilt auch für die Fälle, bei denen das Verfahrensprodukt des Verfahrenschritts (I) vor der Durchführung des Verfahrenschritts (II) und/oder das Verfahrensprodukt des Verfahrenschritts (IV) vor der Durchführung des Verfahrenschritts (V) länger gelagert wurden.

Die Kunststoffformteile (M/T/B) sind außerordentlich breit anwendbar. So können sie hervorragend für die Herstellung von Fortbewegungsmitteln, Bauwerken, Fenstern, Türen, Möbeln und Gebrauchsgegenständen jeglicher Art eingesetzt werden. Bevorzugt werden sie für die Herstellung von Fortbewegungsmitteln, die mit Muskelkraft und/oder mit Motoren betrieben werden, insbesondere von Wasserfahrzeugen, Schienenfahrzeugen, Fluggeräten, Fahrrädern, Motorrädern, PKW, Lastkraftwagen und Omnibusse eingesetzt..

Da sie die so genannte Automobilqualität (vgl. hierzu auch das europäische Patent EP 0 352 298 B1, Seite 15, Zeile 42, bis Seite 17, Zeile 40) aufweisen, eignen sie sich insbesondere hervorragend als Anbauteile für PKW-Karosserien, insbesondere für Karosserien von PKW der Oberklasse.

### Beispiele

### Herstellbeispiel 1

### Die Herstellung einer beschichteten, thermoplastischen Trägerfolie

Es wurde eine beschichtete, thermoplastische Trägerfolie durch kontinuierliches Auftragen der Beschichtungsstoffe (B.1) und (B.2) auf einer Laborbeschichtungsanlage hergestellt.

Als Trägerfolie wurde eine thermoplastische Folie aus Luran® S 778 TE einer Dicke von 800 µm verwendet. Die applizierten Schichten (B.1) und (B.2) wurden getrocknet.

Die resultierende Folie wurde zur weiteren Beschichtung auf eine Rolle aufgewickelt.

### Beispiel 1

### Die Herstellung von Kunststoffformteilen

Für die Herstellung der Kunststoffformteile des Beispiels 1 wurde die beschichtete, thermoplastische Trägerfolie des Herstellbeispiels 1 verwendet.

Für das Beispiel 1 wurde die beschichtete, thermoplastische Trägerfolie des Herstellbeispiels 1 mit der Schutzfolie GH-X 527 der Firma Bischof + Klein, Lengerich, beschichtet.

Die Tabelle 1 gibt einen Überblick über die wesentlichen Eigenschaften der verwendeten Schutzfolie.

**Tabelle 1: Die wesentlichen Eigenschaften der verwendeten Schutzfolie**

| **Schutzfolie:** | **GH-X 527** |
|---|---|
| **Eigenschaften:** | |
| Schichtdicke (µm) | 50 |
| | |
| Speichermodul E' bei Raumtemperatur bis 100 °C, bestimmt mit DMTA (Pa) | 10⁷-10⁸ |
| | |
| Bruchdehnung längs/quer (%) | 430/840 |
| | |
| Transmission für UV-Strahlung und sichtbares Licht einer Wellenlänge von 230 bis 600 nm | > 70% |
| | |
| Härte der Schutzfolie auf der der Beschichtung zugewandten Haftseite (Nanohärte, gemessen mit einem Berkovich-Indentor bei 1 mN bei 23 °C) (GPa) | 0,0128 |
| | |
| Rauhigkeit Rₐ (mit atomic force microscopy (AFM) aus 50 µm² gemessen) (nm) | 16,7 |

Die beschichtete, thermoplastische Trägerfolie, die mit der Schutzfolie beschichtet war, wurde vorgeformt. Anschließend wurde die Schicht (B.2) durch die Schutzfolie hindurch mit UV-Strahlung partiell gehärtet. Als Positivform wurde ein Würfel verwendet. Das resultierende vorgeformte Teil wurde in ein Formwerkzeug eingelegt. Das Werkzeug wurde geschlossen, und der Würfel wurde mit einem flüssigen Kunststoffmaterial hinterspritzt. Das resultierende Kunststoffformteil wurde abgekühlt und dem Werkzeug entnommen. Anschließend wurde die partiell gehärtete Schicht (B.2) mit UV-Strahlung vollständig gehärtet. Danach wurde die Schutzfolie abgezogen.

Die so hergestellten Kunststoffformteile wiesen eine hochglänzende Oberfläche auf, die frei von Oberflächenstörungen war.

## Patentansprüche

1. Verfahren zur Herstellung von Kunststoffformteilen (M/T/B) mit funktionalen Oberflächen (O), bei dem man
(I) auf einer thermoplastischen Trägerfolie (T) eine Beschichtung (B) erzeugt, indem man eine Oberfläche (T.1) von (T)
(I.1) mit mindestens einem pigmentierten Beschichtungsstoff (B.1) beschichtet und
(1.2) die resultierende Schicht (B.1) mit mindestens einem chemisch härtbaren Beschichtungsstoff (B.2), beschichtet, wodurch die Schicht (B.2) resultiert, die nach ihrer Härtung eine transparente Beschichtung (B.2) ergibt,
(II) die resultierende beschichtetes thermoplastische Trägerfolie (T/B) in ein geöffnetes Formwerkzeug einlegt,
(III) das Formwerkzeug schließt und die unbeschichtete Seite (T.2) der beschichteten, thermoplastischen Trägerfolie (T/B) mit einem flüssigen Kunststoffmaterial (M) in Berührung bringt, wodurch die beschichtete, thermoplastische Trägerfolie (T/B) geformt und mit dem Kunststoffmaterial (M) haftfest verbunden wird, und das Kunststoffmaterial (M) sich verfestigen lässt und
(IV) das resultierende beschichtete Kunststoffformteil (M/T/B), dessen Beschichtung (B) nicht, partiell oder vollständig gehärtet ist, dem Formwerkzeug entnimmt, wobei man die
(V) im Verfahrenschritt (I) und/oder nach Abschluss des Verfahrenschritts (I) und/oder im Verfahrenschritt (III) und/oder nach dem Verfahrenschritt (IV) die nicht oder partiell gehärtete Beschichtung (B) vollständig härtet oder nach dem Verfahrensschritt (IV) die vollständig gehärtete Beschichtung (B) nachhärtet;
wobei die Beschichtung (B) wenigstens zeitweise mit einer Schutzfolie . (S) bedeckt ist, **dadurch gekennzeichnet, dass** die Schutzfolie (S)
(s.1) im Temperaturbereich von Raumtemperatur bis 100 °C einen Speichermodul E' von mindestens 10⁷ Pa,
(s.2) längs und quer zu der bei der Herstellung von (S) mit Hilfe gerichteter Herstellverfahren erzeugten Vorzugsrichtung bei 23 °C eine Bruchdehnung > 300% und
(s.3) bei einer Schichtdicke von 50 µm eine Transmission > 70% für UV-Strahlung und sichtbares Licht einer Wellenlänge von 230 bis 600 nm hat
und dass die der Beschichtung (B) zugewandte Seite (S.1) der Schutzfolie (S)
(s. 1.1) eine Härte < 0,06 GPa bei 23 °C und
(s.1.2) eine mit Hilfe der atomic force miscroscopy (AFM) bestimmte Rauhigkeit, entsprechend einem Rₐ-Wert aus 50 µm² < 30 nm, aufweist.

2. Verfahren nach Anspruch 1, **dadurch gekennzeichnet, dass** die Schutzfolie (S)
(s.1) einen Speichermodul E' von 10⁷ bis 10⁸ Pa aufweist.

3. Verfahren nach Anspruch 1 oder 2, **dadurch gekennzeichnet, dass** die Schutzfolie (S)
(s.2) eine Bruchdehnung von 400 bis 900% hat.

4. Verfahren nach einem der Ansprüche 1 bis 3, **dadurch gekennzeichnet, dass** die der Beschichtung (B) zugewandte Seite (S.1) der Schutzfolie (S)
(s. 1.1) eine Härte < 0,02 GPa hat.

5. Verfahren nach einem der Ansprüche 1 bis 4, **dadurch gekennzeichnet, dass**
(s.5) der Abzug der Schutzfolie (S) von der Beschichtung (B) eine gemittelte Kraft < 250 mN/cm erfordert.

6. Verfahren nach einem der Ansprüche 1 bis 5, **dadurch gekennzeichnet, dass** die Schutzfolie (S) aus der Gruppe, bestehend aus Folien aus Polyethylen, Polypropylen, Ethylencopolymerisaten, Propylencopolymerisaten und Ethylen-Propylen-Copolymerisaten, ausgewählt wird.

7. Verfahren nach einem der Ansprüche 1 bis 6, **dadurch gekennzeichnet, dass** die Seite (S.1) der Schutzfolie (S) klebende Eigenschaften hat.

8. Verfahren nach einem der Ansprüche 1 bis 7, **dadurch gekennzeichnet, dass** die der Beschichtung (B) abgewandte Seite (S.2) der Schutzfolie (S) antiblockierende Eigenschaften hat.

9. Verfahren nach einem der Ansprüche 1 bis 8, **dadurch gekennzeichnet, dass** die Schutzfolie (S) aus mehreren Schichten aufgebaut ist.

10. Verfahren nach Anspruch 9, **dadurch gekennzeichnet, dass** die Schutzfolie (S) aus mindestens einer Kernschicht (KNS) aus mindestens einem Homo- oder Copolymerisat, und mindestens einer weiteren Schicht, ausgewählt aus der Gruppe bestehend aus Klebschichten (KS) und Antiblocking-Schichten (AS), aufgebaut ist.

11. Verfahren nach Anspruch 10, **dadurch gekennzeichnet, dass** die Homo- und Copolymerisate der Kernschicht (KNS) aus der Gruppe, bestehend aus Polyethylen, Polypropylen, Ethylencopolymerisaten, Propylencopolymerisaten und Ethylen-Propylen-Copolymerisaten, ausgewählt werden.

12. Verfahren nach einem der Ansprüche 1 bis 11, **dadurch gekennzeichnet, dass** die Schutzfolie (S) 10 bis 100 µm dick ist.

13. Verfahren nach einem der Ansprüche 1 bis 12, **dadurch gekennzeichnet, dass** die Schutzfolie (S) nach dem Verfahrenschritt (I) auf die Beschichtung (B) aufgebracht wird.

14. Verfahren nach einem der Ansprüche 1 bis 13, **dadurch gekennzeichnet, dass** die Schutzfolie (S) unmittelbar vor dem Verfahrenschritt (II) von der Beschichtung (B) der beschichteten, thermoplastischen, mit der Schutzfolie (S) versehenen Trägerfolie (T/B/S) abgezogen wird.

15. Verfahren nach einem der Ansprüche 1 bis 13, **dadurch gekennzeichnet, dass** die Schutzfolie (S) nach dem Verfahrenschritt (IV) von der Beschichtung (B) des mit der Schutzfolie (S) versehenen Kunststoffformteils (M/T/B/S) abgezogen wird.

16. Verfahren nach Anspruch 15, **dadurch gekennzeichnet, dass** die Schutzfolie (S) vor oder nach der vollständigen Härtung der Beschichtung (B) oder vor oder nach der Nachbehandlung des Kunststoffformteils (M/T/B) von der Beschichtung (B) abgezogen wird.

17. Verfahren nach einem der Ansprüche 1 bis 16, **dadurch gekennzeichnet, dass** die thermoplastische Trägerfolie (T) eine Schichtdicke ≥ 0,5 mm hat.

18. Verfahren nach einem der Ansprüche 1 bis 17, **dadurch gekennzeichnet, dass** die beschichteten, thermoplastischen Trägerfolien (T/B) oder die hieraus zugeschnittenen Stücke vor dem Verfahrenschritt (II) vorgeformt werden.

19. Verfahren nach Anspruch 18, **dadurch gekennzeichnet, dass** die die beschichteten, thermoplastischen Trägerfolien (T/B) oder die hieraus zugeschnittenen Stücke an die Konturen der Formwerkzeuge angepasst werden.

20. Verfahren nach einem der Ansprüche 1 bis 19, **dadurch gekennzeichnet, dass** die Funktionalität der Oberfläche (O) der Kunststoffformtelle (M/T/B) farbgebend, effektgebend, farb- und effektgebend, elektrisch leitfähig, magnetisch abschirmend, korrosionshemmend, fluoreszierend und/oder phosphoreszierend ist.

21. Verwendung der mit Hilfe des Verfahrens gemäß einem der Ansprüche 1 bis 20 hergestellten Kunststoffformteile (M/T/B) für die Herstellung von Fortbewegungsmitteln, Bauwerken, Fenstern, Türen, Möbeln und Gebrauchsgegenständen.

22. Verwendung einer Folie, die
(s.1) im Temperaturbereich von Raumtemperatur bis 100 °C einen Speichermodul E' von mindestens 10⁷ Pa,
(s.2) längs und quer zu der bei der Herstellung von (S) mit Hilfe gerichteter Herstellverfahren erzeugten Vorzugsrichtung bei 23 °C eine Bruchdehnung > 300% und
(s.3) bei einer Schichtdicke von 50 µm eine Transmission > 70% für UV-Strahlung und sichtbares Licht einer Wellenlänge von 230 bis 600 nm hat
wobei mindestens eine Oberfläche der Folie
(s. 1.1) eine Härte < 0,06 GPa bei 23 °C und
(s.1.2) eine mit Hilfe der atomic force miscroscopy (AFM) bestimmte Rauhigkeit, entsprechend einem Rₐ-Wert aus 50 µm² < 30 nm,
aufweist, als Schutzfolie (S) bei der Herstellung von Kunststoffformteilen.

## Claims

1. Process for producing polymer mouldings (M/T/B) with functional surfaces (O) for which
(I) a coating (B) is produced on a thermoplastic support sheet (T) by
(I.1) coating one surface (T.1) of (T) with at least one pigmented coating material (B.1) and
(1.2) coating the resulting film (B.1) with at least one chemically curable coating material (B.2) to give the film (B.2) which following its curing gives a transparent coating (B.2),
(II) the resulting coated thermoplastic support sheet (T/B) is inserted into an open mould,
(III) the mould is closed and the uncoated side (T.2) of the coated thermoplastic support sheet (T/B) is contacted with a liquid polymeric material (M) to shape the coated thermoplastic support sheet (T/B) and join it firmly to the polymeric material (M), and the polymeric material (M) is caused to solidify, and
(IV) the resulting coated polymer moulding (M/T/B), whose coating (B) is uncured, part-cured or full-cured, is removed from the mould, where
(V) in step (I) and/or after the end of step (I) and/or in step (III) and/or after step (IV) the uncured or part-cured coating (B) is fully cured or after step (IV) the full-cured coating (B) is aftercured;
the coating (B) being covered at least temporarily with a protective sheet (S), **characterized in that** the protective sheet (S) has
(s.1) a storage modulus E' of at least 10⁷ Pa in the temperature range from room temperature to 100°C,
(s.2) an elongation at break > 300% at 23°C longitudinally and transversely to the preferential direction produced by means of directed production processes in the production of (S), and
(s.3) a transmittance > 70% for UV radiation and visible light with a wavelength of from 230 to 600 nm for a path length of 50 µm
and **in that** the coating (B)-facing side (S.1) of the protective sheet (S) has
(s.1.1) a hardness < 0.06 GPa at 23°C and
(s.1.2) a roughness corresponding to an Rₐ from 50 µm² < 30 nm as determined by means of atomic force microscopy (AFM).

2. Process according to Claim 1, **characterized in that** the protective sheet (S)
(s.1) has a storage modulus E' of from 10⁷ to 10⁸ Pa.

3. Process according to Claim 1 or 2, **characterized in that** the protective sheet (S)
(s.2) has an elongation at break of from 400 to 900%.

4. Process according to any of Claims 1 to 3, **characterized in that** the coating (B)-facing side (S.1) of the protective sheet (S)
(s.1.1) has a hardness < 0.02 GPa.

5. Process according to any of Claims 1 to 4, **characterized in that**
(s.5) the removal of the protective sheet (S) from the coating (B) requires an averaged force < 250 mN/cm.

6. Process according to any of Claims 1 to 5, **characterized in that** the protective sheet (S) is selected from the group consisting of films made of polyethylene, polypropylene, ethylene copolymers propylene copolymers, and ethylene-propylene copolymers.

7. Process according to any of Claims 1 to 6, **characterized in that** the side (S.1) of the protective sheet (S) has adhesive properties.

8. Process according to any of Claims 1 to 7, **characterized in that** the side (S.2) of the protective sheet (S) that faces away from the coating (B) has antiblocking properties.

9. Process according to any of Claims 1 to 8, **characterized in that** the protective sheet (S) is constructed from a plurality of layers.

10. Process according to Claim 9, **characterized in that** the protective sheet (S) is constructed from at least one core layer (KNS) made of at least one homopolymer or copolymer and from at least one further layer selected from the group consisting of adhesive layers (KS) and antiblocking layers (AS).

11. Process according to Claim 10, **characterized in that** the homopolymers and copolymers of the core layer (KNS) are selected from the group consisting of polyethylene, polypropylene, ethylene copolymers, propylene copolymers, and ethylene-propylene copolymers.

12. Process according to any of Claims 1 to 11, **characterized in that** the thickness of the protective sheet (S) is from 10 to 100 µm.

13. Process according to any of Claims 1 to 12, **characterized in that** the protective sheet (S) is applied to the coating (B) after step (I).

14. Process according to any of Claims 1 to 13, **characterized in that** the protective sheet (S) is removed from the coating (B) of the coated, thermoplastic, protective-sheet (S)-covered support sheet (T/B/S) immediately before step (II).

15. Process according to any of Claims 1 to 13, **characterized in that** the protective sheet (S) is removed from the coating (B) of the protective sheet (S)-covered polymer moulding (M/T/B/S) after step (IV).

16. Process according to Claim 15, **characterized in that** the protective sheet (S) is removed from the coating (B) before or after the coating (B) has been fully cured or before or after the polymer moulding (M/T/B) has been aftertreated.

17. Process according to any of Claims 1 to 16, **characterized in that** the thermoplastic support sheet (T) has a film thickness ≥ 0.5 mm.

18. Process according to any of Claims 1 to 17, **characterized in that** the coated thermoplastic support sheets (T/B) or the cut-to-size pieces thereof are preformed prior to step (II).

19. Process according to Claim 18, **characterized in that** the coated thermoplastic support sheets (T/B) or the cut-to-size pieces thereof are adapted to the contours of the moulds.

20. Process according to any of Claims 1 to 19, **characterized in that** the functionality of the surface (O) of the polymer mouldings (M/T/B) is one which imparts colour, effect, colour and effect, electroconductivity, magnetic shielding, inhibition of corrosion, fluorescence and/or phosphorescence.

21. Use of the polymer mouldings (M/T/B) produced by means of the process according to any of Claims 1 to 20 for producing means of transport, constructions, windows, doors, furniture, and utility articles.

22. Use of a sheet having
(s.1) a storage modulus E' of at least 10⁷ Pa in the temperature range from room temperature to 100°C,
(s.2) an elongation at break > 300% at 23°C longitudinally and transversely to the preferential direction produced by means of directed production processes in the production of (S), and
(s.3) a transmittance > 70% for UV radiation and visible light with a wavelength of from 230 to 600 nm for a path length of 50 µm
where at least one surface of the sheet has
(s.1.1) a hardness < 0.06 GPa at 23°C and
(s.1.2) a roughness corresponding to an Rₐ from 50 µm² < 30 nm as determined by means of atomic force microscopy (AFM),
as protective sheet (S) in the production of polymer mouldings.

## Revendications

1. Procédé pour la fabrication de pièces moulées en matériau synthétique (M/T/B) avec des surfaces fonctionnelles (O), dans lequel
(I) on réalise, sur une feuille support thermoplastique (T), un revêtement (B), en ce qu'une surface (T.1) de (T)
(I.1) est revêtue par au moins une substance de revêtement pigmentée (B.1) et
(I.2) la couche obtenue (B.1) est revêtue par au moins une substance de revêtement chimiquement durcissable (B.2), suite à quoi on obtient la couche (B.2), qui donne après son durcissement un revêtement transparent (B.2),
(II) on place la feuille support thermoplastique revêtue (T/B) obtenue dans un outil de moulage ouvert,
(III) on ferme l'outil de moulage et on amène la face non revêtue (T.2) de la feuille support thermoplastique revêtue (T/B) en contact avec un matériau synthétique (M) liquide, suite à quoi la feuille support thermoplastique revêtue (T/B) est moulée et assemblée par adhérence avec le matériau synthétique (M) et on laisse le matériau synthétique (M) se solidifier et
(IV) on prélève la pièce moulée en matériau synthétique revêtue (M/T/B) obtenue, dont le revêtement (B) n'est pas durci, est partiellement ou totalement durci, du moule
(V) en durcissant complètement dans l'étape de procédé (I) et/ou après l'étape de procédé (I) et/ou dans l'étape de procédé (III) et/ou après l'étape de procédé (IV) le revêtement (B) non durci ou partiellement durci ou en post-durcissant le revêtement (B) totalement durci après l'étape de procédé (IV) ;
où le revêtement (B) est recouvert, au moins temporairement, par une feuille support (S), **caractérisé en ce que** la feuille de protection (S)
(s.1) présente, dans la plage de température allant de la température ambiante à 100°C, un module d'accumulation E' d'au moins 10⁷ Pa,
(s.2) présente, longitudinalement et transversalement par rapport à la direction préférentielle produite lors de la fabrication de (S) à l'aide de procédés de fabrication orientés, à 23°C, un allongement à la rupture > 300% et
(s.3) présente, à une épaisseur de couche de 50 µm, une transmission > 70% pour le rayonnement UV et la lumière visible d'une longueur d'onde de 230 à 600 nm
et **en ce que** la face (S.1) orientée vers le revêtement (B) de la feuille de protection (S)
(s.1.1) présente une dureté < 0,06 GPa à 23°C et
(s.1.2) présente une rugosité déterminée à l'aide de la microscopie de la force atomique (MFA), correspondant à une valeur Rₐ de 50 µm² < 30 nm.

2. Procédé selon la revendication 1, **caractérisé en ce que** la feuille de protection (S)
(s.1) présente un module d'accumulation E' de 10⁷ à 10⁸ Pa.

3. Procédé selon la revendication 1 ou 2, **caractérisé en ce que** la feuille de protection (S)
(s.2) présente un allongement à la rupture de 400 à 900%.

4. Procédé selon l'une quelconque des revendications 1 à 3, **caractérisé en ce que** la face (S.1) orientée vers le revêtement (B) de la feuille de protection (S)
(s.1.1) présente une dureté < 0,02 GPa.

5. Procédé selon l'une quelconque des revendications 1 à 4, **caractérisé en ce que**
(s.5) le retrait de la feuille de protection (S) du revêtement (B) exige une force moyenne < 250 mN/cm.

6. Procédé selon l'une quelconque des revendications 1 à 5, **caractérisé en ce que** la feuille de protection (S) est choisie dans le groupe constitué par les feuilles en polyéthylène, en polypropylène, en copolymères d'éthylène, en copolymères de propylène et en copolymères d'éthylène-propylène.

7. Procédé selon l'une quelconque des revendications 1 à 6, **caractérisé en ce que** la face (S.1) de la feuille de protection (S) présente des propriétés adhésives.

8. Procédé selon l'une quelconque des revendications 1 à 7, **caractérisé en ce que** la face (S.2) de la feuille de protection (S) opposée au revêtement (B) présente des propriétés antiadhésives.

9. Procédé selon l'une quelconque des revendications 1 à 8, **caractérisé en ce que** la feuille de protection (S) est formée par plusieurs couches.

10. Procédé selon la revendication 9, **caractérisé en ce que** la feuille de protection (S) est constituée par au moins une couche de noyau (CN) en au moins un homopolymère ou copolymère et par au moins une autre couche, choisie dans le groupe constitué par les couches adhésives (CA) et les couches antiadhésives (CAA).

11. Procédé selon la revendication 10, **caractérisé en ce que** les homopolymères et les copolymères de la couche de noyau (CN) sont choisis dans le groupe constitué par le polyéthylène, le polypropylène, les copolymères d'éthylène, les copolymères de propylène et les copolymères d'éthylène-propylène.

12. Procédé selon l'une quelconque des revendications 1 à 11, **caractérisé en ce que** la feuille de protection (S) présente une épaisseur de 10 à 100 µm.

13. Procédé selon l'une quelconque des revendications 1 à 12, **caractérisé en ce que** la feuille de protection (S) est appliquée sur le revêtement (B) après l'étape de procédé (I).

14. Procédé selon l'une quelconque des revendications 1 à 13, **caractérisé en ce que** la feuille de protection (S) est retirée du revêtement (B) de la feuille support (T/B/S) revêtue, thermoplastique, pourvue de la feuille de protection (S) juste avant l'étape de procédé (II).

15. Procédé selon l'une quelconque des revendications 1 à 13, **caractérisé en ce que** la feuille de protection (S) est retirée du revêtement (B) de la pièce moulée (M/T/B/S) pourvue de feuille de protection (S) après l'étape de procédé (IV).

16. Procédé selon la revendication 15, **caractérisé en ce que** la feuille de protection (S) est retirée du revêtement (B) avant ou après le durcissement complet du revêtement (B) ou avant ou après le post-traitement de la pièce moulée en matériau synthétique (M/T/B).

17. Procédé selon l'une quelconque des revendications 1 à 16, **caractérisé en ce que** la feuille support thermoplastique (T) présente une épaisseur de couche ≥ 0,5 mm.

18. Procédé selon l'une quelconque des revendications 1 à 17, **caractérisé en ce que** les feuilles support (T/B) revêtues, thermoplastiques ou les morceaux découpés de celles-ci sont préformé(e)s avant l'étape de procédé (II).

19. Procédé selon la revendication 18, **caractérisé en ce que** les feuilles support (T/B) revêtues, thermoplastiques ou les morceaux découpés de celles-ci sont adapté(e)s aux contours des outils de moulage.

20. Procédé selon l'une quelconque des revendications 1 à 19, **caractérisé en ce que** la fonctionnalité de la surface (O) des pièces moulées en matériau synthétique (M/T/B) confère une couleur, un effet, une couleur et un effet, une conductibilité électrique, un écran magnétique, une inhibition de la corrosion, une fluorescence ou une phosphorescence.

21. Utilisation de pièces moulées en matériau synthétique (M/T/B) fabriquées à l'aide du procédé selon l'une quelconque des revendications 1 à 20 pour la fabrication de moyens de déplacement, d'édifices, de fenêtres, de portes, de meubles et d'objets utilitaires.

22. Utilisation d'une feuille qui
(s.1) présente, dans la plage de température allant de la température ambiante à 100°C, un module d'accumulation E' d'au moins 10⁷ Pa,
(s.2) présente, longitudinalement et transversalement par rapport à la direction préférentielle produite lors de la fabrication de (S) à l'aide de procédés de fabrication orientés, à 23°C, un allongement à la rupture > 300% et
(s.3) présente, à une épaisseur de couche de 50 µm, une transmission > 70% pour le rayonnement UV et la lumière visible d'une longueur d'onde de 230 à 600 nm
où au moins une surface de la feuille
(s.1.1) présente une dureté < 0,06 GPa à 23°C et
(s.1.2) présente une rugosité déterminée à l'aide de la microscopie de la force atomique (MFA),
correspondant à une valeur Ra de 50 µm² < 30 nm, comme feuille de protection (S) lors de la fabrication de pièces moulées en matériau synthétique.
